# EUROPÄISCHE PATENTSCHRIFT

(11) **EP 2 895 359 B1**
(45) Veröffentlichungstag und Bekanntmachung des Hinweises auf die Patenterteilung: **05.10.2016**
(21) Anmeldenummer: 13762736.0
(22) Anmeldetag: 22.08.2013
(51) Int. Cl.: B60R 25/0215, B62H 5/06

(54) **ELEKTRISCHE LENKVERRIEGELUNG**
ELECTRIC STEERING LOCK
VERROUILLAGE ÉLECTRIQUE DE DIRECTION

(30) Priorität: 17.09.2012 DE 102012018237
(43) Veröffentlichungstag der Anmeldung: 22.07.2015
(73) Patentinhaber: Huf Hülsbeck & Fürst GmbH & Co. KG, 42551 Velbert (DE)
(72) Erfinder: INDINGER, Max, 82131 Gauting (DE)
(74) Vertreter: Schäfer, Matthias W.
(86) Internationale Anmeldenummer: PCT/DE2013/000484
(87) Internationale Veröffentlichungsnummer: WO 2014/040579

(56) Entgegenhaltungen:
- WO-A1-2012/089547
- JP-A- H06 263 071
- US-A- 5 343 077
- US-A- 5 634 358
- US-B2- 7 788 955

## Beschreibung

### Gebiet der Erfindung

Die Erfindung betrifft eine elektrische Lenkverriegelung für ein Fahrzeug, insbesondere ein motorisiertes Zwei- oder Dreirad, mit einer Antriebseinheit, einem Sperrbolzen und einem an eine Steuerkulisse mechanisch gekoppelten Betätiger, wodurch der Betätiger zum Sperren und zum Freigeben eines Lenkers durch den Sperrbolzen nur in einem bestimmten Lenkwinkelbereich bewegbar ist.

### Stand der Technik

Aus dem Stand der Technik sind elektrische Lenkverriegelungen für ein motorisiertes Zweirad bekannt, bei denen die Lenkungsverriegelung beispielsweise durch einen Elektromotor oder einen Elektromagneten angetrieben wird. Eine derartige Lenkverriegelung weist einen zwischen einer ersten und einer zweiten Endposition bewegbaren Sperrbolzen zur Verriegelung eines Lenkers in Bezug auf einen Rahmen auf. Der Sperrbolzen ist in der ersten Position, der sogenannten Sperrstellung, in blockierenden Eingriff des Lenkung mit dem Rahmen bringbar und steht in der zweiten Position, der sogenannten Freigabestellung, außer Eingriff der Lenkung mit dem Rahmen. Der Sperrbolzen ist beispielsweise durch den Elektromotor, der durch Anlegen von elektrischer Spannung in der jeweiligen Drehrichtung betrieben wird, bewegbar. Dabei wird der Elektromotor oder der Elektromagnet nur dann zur Entriegelung betrieben, wenn Endschalter zur Erfassung der Lenkposition ein entsprechendes Signal senden. Hierfür ist eine zusätzliche Steuerung mit Mikroschaltern etc. erforderlich.

Eine solche Verriegelungseinrichtung für ein motorisiertes Zweirad ist aus der US 7,788,955 B2 bekannt, die zur Erfassung der aktuellen Lenkerstellung einen als eine elektromechanische Vorrichtung ausgeführten Orientierungssensor, einen Entriegelungsstellungs-Sensor und einen Verriegelungsstellungs-Sensor aufweist. Dadurch werden an eine Steuereinheit entsprechende Signale übertragen und der Sperrbolzen nur dann bewegt, wenn der Lenker in einer verschließbaren Position in Bezug zum Rahmen angeordnet ist.

Des Weiteren sind aus dem Stand der Technik elektrische Lenkverriegelungen für ein motorisiertes Zweirad bekannt, die ohne Positionsgeber ausgerüstet sind und ab dem Zeitpunkt des Betätigens eines Betätigers intermittierend einen Elektromotor oder einen Elektromagneten antreiben. Dadurch wird ein Sperrbolzen solange bewegt, bis eine Endstellung des Sperrbolzens zum Verriegeln oder Entriegeln einnehmbar ist. Dabei wird der Sperrbolzen auch außerhalb einer Sperrbolzenaufnahme angetrieben und kann nicht den kompletten Verfahrweg bis zu der Verriegelungsstellung bewegt werden. Da der Sperrbolzen nach dem Betätigen nicht sofort seine Endposition in der Sperrbolzenaufnahme findet, insbesondere beim Verriegeln, ist ein fehlertoleranter Antrieb mit einem ausreichend dimensionierten Antrieb, insbesondere Getriebe und Elektromotor, zur Kompensierung der auftretenden Kräfte erforderlich. Dadurch muss die Verriegelungseinrichtung massiv ausgestaltet werden.

WO 2012/089547 A1 offenbart auch eine elektrische Lenkverriegelung.

Vor diesem Hintergrund liegt der Erfindung die Aufgabe zugrunde eine elektrische Lenkverriegelung, insbesondere für ein motorisiertes Zweirad zur Verfügung zu stellen, die bei hoher Zuverlässigkeit einfach und kostengünstig zu fertigen ist. Zusätzlich soll die elektrische Lenkverriegelung gewichtsoptimiert, einfach und sicher montierbar sein.

Diese Aufgabe wird durch eine elektrische Lenkverriegelung, insbesondere für ein motorisiertes Zweirad mit den Merkmalen des Anspruchs 1 gelöst. Vorteilhafte Ausführungsformen und Weiterbildungen der Erfindung werden in den Unteransprüchen beschrieben.

Dazu wird erfindungsgemäß eine elektrische Lenkverriegelung für ein Fahrzeug, insbesondere ein motorisiertes Zwei- oder Dreirad, mit einer Antriebseinheit, einem Sperrbolzen, einem Betätiger und einer Steuerkulisse, die mit dem Betätiger mechanisch derart gekoppelt ist, dass dieser zum Sperren und zum Freigeben einer Lenkstange (nachfolgend Lenker) durch den Sperrbolzen nur in einem bestimmten Lenkwinkelbereich, insbesondere bei = 20 ° Lenkwinkel, in einer Hubachse bewegbar ist, zur Verfügung gestellt. Da der Sperrbolzen aufgrund der mechanischen Koppelung des Betätigers und der Steuerkulisse nur dann bewegt wird, wenn der Lenker in einer verschließbaren Position in Bezug zu einem Fahrzeugrahmen angeordnet ist, muss diese Lenkverriegelung kein blockierfestes Getriebe aufweisen und kann somit gewichtsoptimiert hergestellt werden. Dadurch kann ebenfalls eine leichtere Antriebseinheit in einem kompakteren Gehäuse angeordnet werden. Des Weiteren kann auf eine zusätzliche elektronische Sensorik verzichtet werden und somit können die Herstellungskosten und Montagekosten wiederum gesenkt werden. Die mechanische Kopplung von dem Betätiger und der Steuerkulisse kann zum Beispiel auch aus einer Umlenkung und/oder einem Getriebe bestehen. Dadurch ist der Betätiger unabhängig von der Position der Steuerkulisse anbringbar. Diese elektrische Lenkverriegelung ist für sämtliche lenkergesteuerten Fahrzeuge, wie bei eine Jet-Ski, einem Snow-Mobil etc. vorstellbar.

Vorteilhafterweise ist der Betätiger an dem drehbaren Lenker und die Steuerkulisse an dem Fahrzeugrahmen angeordnet. Dadurch kann in einem Lenkkopf einer Lenkung kostengünstig und zuverlässig eine Sperrbolzenaufnahme zur Aufnahme des Sperrbolzens in der verschließbaren Position in Bezug zum Rahmen vorgesehen werden. Damit kann eine einfache formschlüssige Verbindung zwischen der Lenkung und dem Fahrzeugrahmen angeordnet werden.

Alternativ kann der Betätiger an einem Fahrzeugrahmen und die Steuerkulisse an dem drehbaren Lenker angeordnet sein. Diese Flexibilität ermöglich die Anbringung der Lenkverriegelung an den unterschiedlichsten Fahrzeugtypen und Positionen.

Vorteilhafterweise ist der Betätiger nur auf einer Lenkanschlagseite des Lenkers in dem bestimmten Lenkwinkelbereich bewegbar. Dadurch kann der Platzbedarf der Lenkverriegelung und damit auch das Gewicht nochmals reduziert werden.

Der Betätiger ist zweistufig in der Hubachse bewegbar, wobei in einer ersten Position eine Zündung betätigbar ist und in einer zweiten Position das Sperren bzw. Freigeben des Sperrbolzens ausführbar ist. Die zweite Position kann nur erreicht werden wenn sich der Lenker in einer Verriegelungsposition befindet.

Vorteilhafterweise erstreckt sich die Steuerkulisse in radialer Richtung und weist eine erste Fläche auf. Dadurch kann die Steuerkulisse sehr einfach, leicht und kostengünstig hergestellt werden. Auch ist eine Montage schnell und kostengünstig durchführbar. Denkbar sind an die erste Fläche angrenzende schräge Abschnitte oder Abschnitte mit Rundungen um den Verschleiß zwischen Betätiger und Steuerkulisse beim Drehen des Lenkers und gleichzeitigem Betätigen des Betätigers zu reduzieren.

Zusätzlich zu der ersten Fläche kann vorteilhafterweise eine zweite Fläche über eine Hubfläche verbunden angeordnet ist. Die Hubfläche kann sowohl mit Schrägen als auch mit Rundungen ausgebildet sein. Dadurch ist mit der ersten Fläche eine erste Position zur Freigabe der Zündung und mit der zweiten Position eine Position zum Verriegeln bzw. Entriegeln mechanisch definiert. Zusätzlich Wird auch hierduch der Verschleiß zwischen Betätiger und Steuerkulisse beim Drehen des Lenkers und gleichzeitigem Betätigen des Betätigers reduziert.

Vorteilhafterweise ist die Hubachse des Betätigers gegenüber der Steuerkulisse bei einem bestimmten Lenkwinkel, insbesondere von = 20 °, senkrecht zu der ersten und zweiten Fläche angeordnet und der Betätiger bis zur zweiten Position beweglich. Somit wird innerhalb eines minimalen Hubs des Betätigers die zweite Position erreicht

Der Betätiger ist gegenüber der Steuerkulisse bei einem bestimmten Lenkwinkel, insbesondere von < 20 °, nur bis zur ersten Position beweglich. Dadurch wird das Verriegeln und Entriegeln bei geringem Lenkerwinkel mechanisch gesperrt.

### Kurze Beschreibung der Zeichnungen

Nachfolgend wird die Erfindung anhand eines Ausführungsbeispiels zusammen mit den beigefügten Zeichnungen erläutert. Dazu zeigt:
Figur 1 eine perspektivische Ansicht einer elektrischen Lenkverriegelung für ein motorisiertes Zweirad gemäß einer bevorzugten Ausführungsform der vorliegenden Erfindung;
Figur 2 eine perspektivische Ansicht eines Betätigers und einer Schaltkulisse der elektrischen Lenkverriegelung für ein motorisiertes Zweirad gemäß einer bevorzugten Ausführungsform der vorliegenden Erfindung;
Figur 3 eine perspektivische Ansicht des Betätigers und der Schaltkulisse der elektrischen Lenkverriegelung in einer neutralen Position gemäß einer bevorzugten Ausführungsform der vorliegenden Erfindung;
Figur 4 eine perspektivische Ansicht des Betätigers und der Schaltkulisse der elektrischen Lenkverriegelung in einer ersten Position gemäß einer bevorzugten Ausführungsform der vorliegenden Erfindung;
Figur 5 eine perspektivische Ansicht des Betätigers und der Schaltkulisse der elektrischen Lenkverriegelung in einer zweiten Position gemäß einer bevorzugten Ausführungsform der vorliegenden Erfindung und
Figur 6 eine Schnittdarstellung der elektrischen Lenkverriegelung gemäß einer bevorzugten Ausführungsform der vorliegenden Erfindung.

Nachfolgend beziehen sich Richtungsangaben auf die Zeichnungsebene bzw. auf die translatorische Bewegungsrichtung des Betätigers sofern sich aus dem Text nichts anderes ergibt.

### Detaillierte Beschreibung einer bevorzugten Ausführungsform

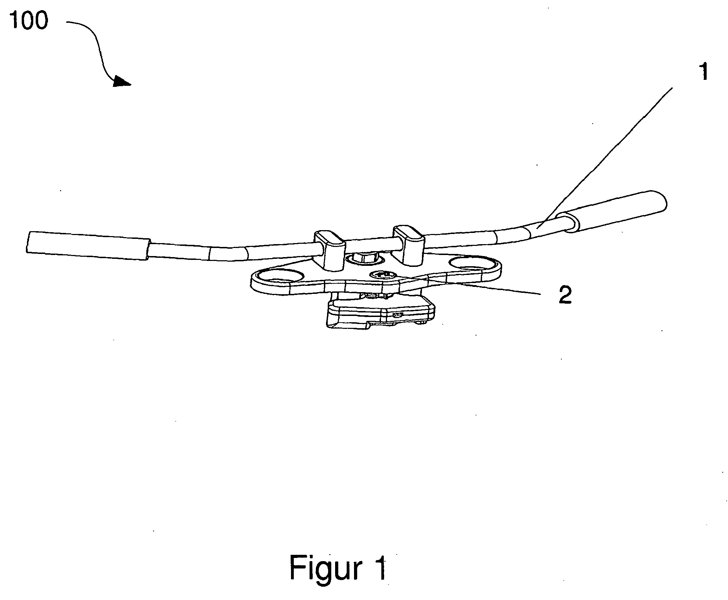

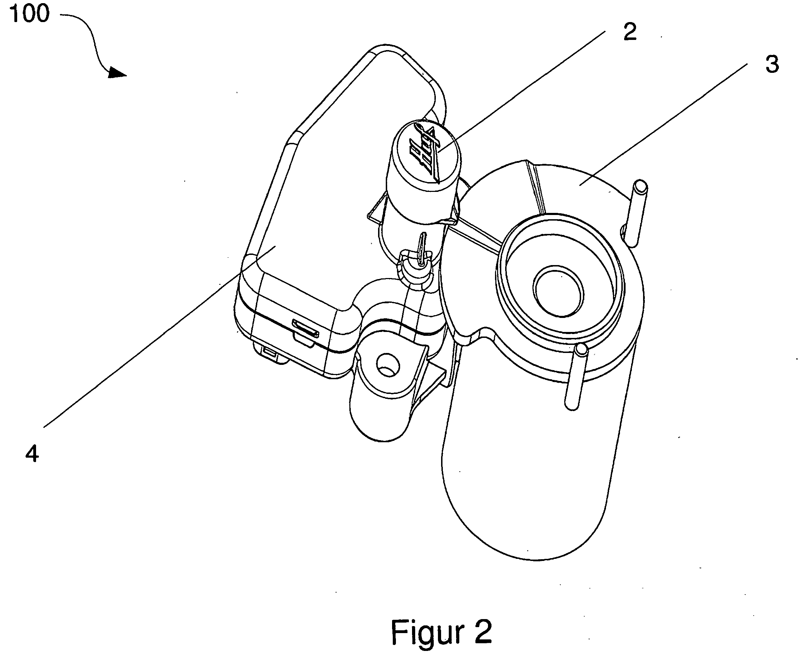

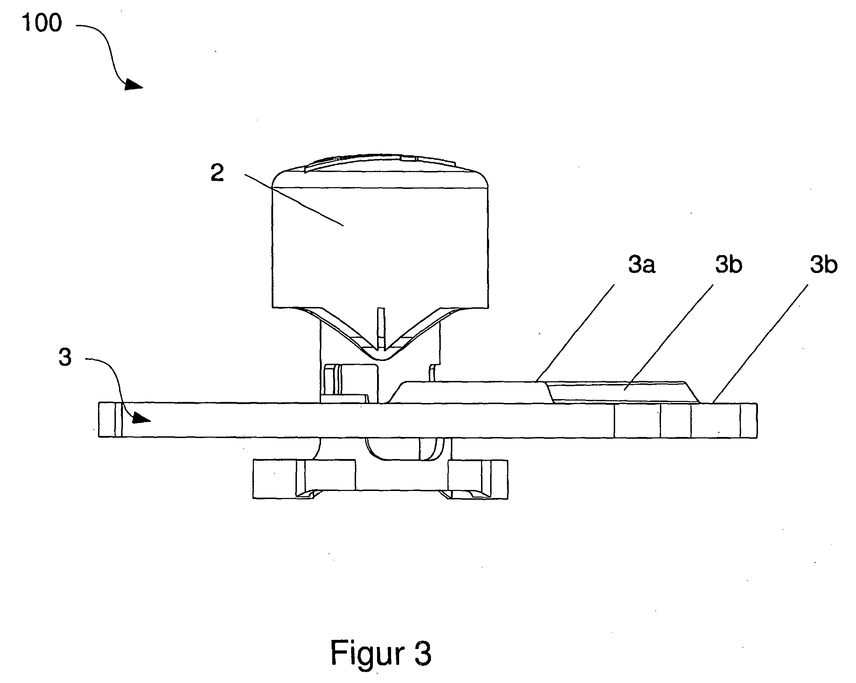

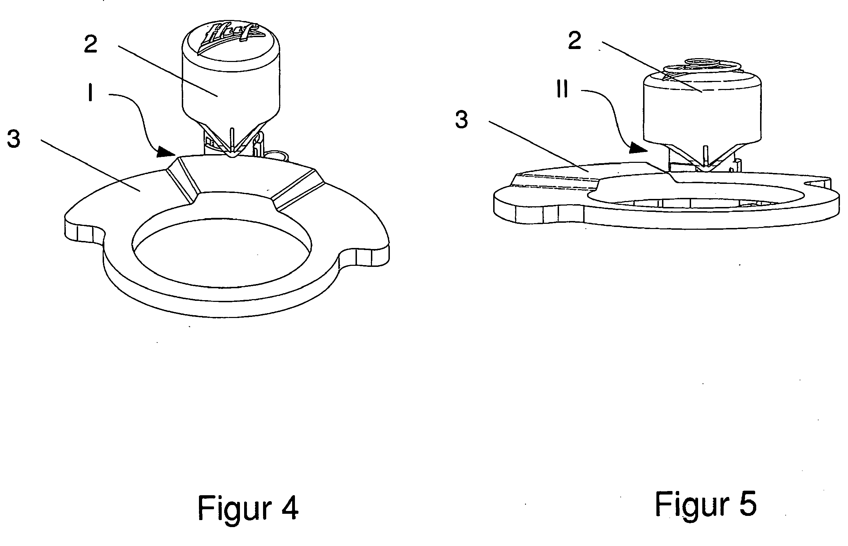

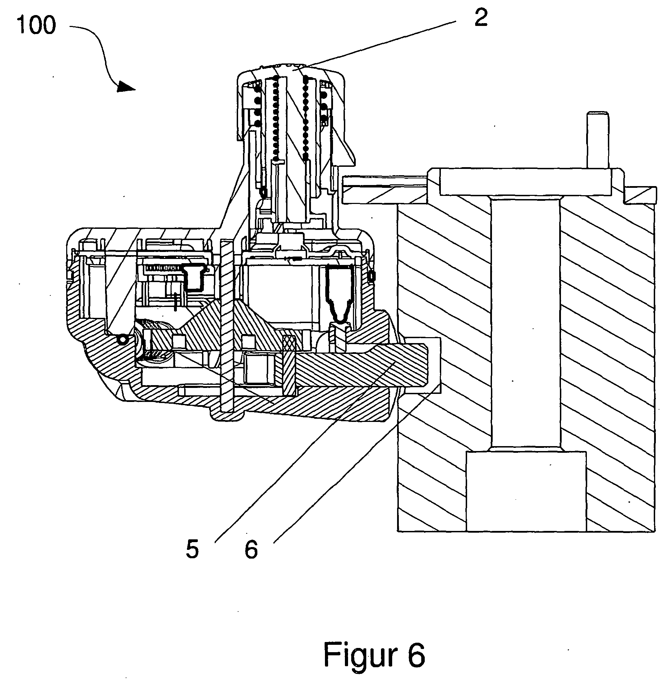

Die Figuren 1 bis 6 zeigen eine bevorzugte Ausführungsform einer elektrischen Lenkverriegelung 100 gemäß der vorliegenden Erfindung.

Die elektrische Lenkverriegelung 100 weist eine Antriebseinheit, einen Sperrbolzen 5, einen Betätiger 2 und eine Steuerkulisse 3 auf.

Der Betätiger 2 ist im Wesentlichen zylinderförmig ausgebildet und an einem Gehäuse 4 der Lenkverriegelung angeordnet. Dabei ist der Betätiger 2 als zweistufiger Druckschalter ausgeführt und in zwei Positionen bringbar. Wird der Betätiger 2 gedrückt, dann erreicht er von seiner Ruhelage ausgehend zuerst eine erste Position I und eine zweite Position II. Wobei der Betätiger 2 die zweite Position II nur erreichen kann, wenn sich ein Lenker 1 in einer Verriegelungsposition bzw. Entriegelungsposition befindet. Der Betätiger wird nur in der Ruhelage stabil gehalten. In der ersten Position I kann die Zündung eines Fahrzeugs an- und ausgeschaltet werden und in der zweiten Position II kann die elektrische Lenkverriegelung 100 ver- und entriegelt werden.

Damit die zweite Position II für den Betätiger 2 nur erreichbar ist, wenn sich ein Lenker in einer Verriegelungsposition befindet, ist der Betätiger 2 mechanisch mit der Steuerkulisse 3 gekoppelt. Dadurch ist der Betätiger 2 zum Sperren und zum Freigeben eines Lenkers 1 durch den Sperrbolzen 5 nur in einem bestimmten Lenkwinkelbereich, insbesondere bei = 20° Lenkwinkel, in einer Hubachse bewegbar. Im Gegensatz zu dem an der drehbaren Lenkung montierten Gehäuse 4 ist.die Steuerkulisse 3 am Lenkkopf eines Fahrzeugrahmens angeordnet.

Die Steuerkulisse 3 ist im Wesentlichen ringförmig ausgebildet und weist eine sich in radialer Richtung erstreckende erste Fläche 3a auf. Parallel zur ersten Fläche 3a und axial versetzt ist in der Steuerkulisse 3 eine zweite Fläche 3b ausgebildet. Dabei ist die zweite Fläche 3b über schräge Hubflächen 3c mit der ersten Fläche 3a einstückig verbunden. Des Weiteren weist die zweite Fläche 3b einen größeren Abstand als die erste Fläche 3a vom Betätiger 2 auf.

Wird der Lenker 1 aus einer 0° Lage relativ zum Rahmen des Zweirads gedreht, dann begrenzt die erste Fläche 3a bis zu einem Lenkwinkel im Wesentlichen < 20° den maximalen Hub des Betätigers 2 auf die erste Position I. Wird die Lenkung weiter gedreht und überschreitet einen Lenkeinschlag von im Wesentlichen = 20°, dann wird der Betätiger 2 über die erste Fläche I hinweggedreht und die Hubbegrenzung auf die erste Position I entfällt. Dies entspricht einer Verriegelungsstellung, bei der der Sperrbolzen nach dem Betätigen des Betätigers 2 eine Endposition in einer Sperrbolzenaufnahme 6 findet bzw. einer Entriegelungsstellung, bei der der Sperrbolzen nach dem Betätigen des Betätigers 2 aus der Sperrbolzenaufnahme 6 gezogen ist.

Es ist dem Fachmann geläufig, dass auch andere Abwandlungen und Ausgestaltungen möglich sind, sofern sie sich im Schutzumfang der Ansprüche bewegen. So ist beispielsweise auch eine elektrische Lenkverriegelung für sogenannte Quad-Bikes von der Erfindung umfasst.

### Bezugszeichenliste

- 100: elektrische Lenkverriegelung
- 1: Lenker
- 2: Betätiger
- 3: Steuerkulisse
- 3a: erste Fläche
- 3b: zweite Fläche
- 3c: Hubfläche
- 4: Gehäuse
- 5: Sperrbolzen
- 6: Sperrbolzenaufnahme
- I: erste Position
- II: zweite Position

## Patentansprüche

1. Elektrische Lenkverriegelung (100) für ein Fahrzeug, insbesondere ein motorisiertes Zwei- oder Dreirad, mit:
einer Antriebseinheit,
einem Sperrbolzen (5),
einem Betätiger (2) und
einer Steuerkulisse (3), die mit dem Betätiger (2) mechanisch derart gekoppelt ist, dass dieser zum Sperren und zum Freigeben eines Lenkers (1) durch den Sperrbolzen (5) nur in einem bestimmten Lenkwinkelbereich in einer Hubachse bewegbar ist,
**dadurch gekennzeichnet, dass**
der Betätiger (2) nur bei einem Lenkwinkel von ≥ 20° zweistufig in der Hubachse bewegbar ist, wobei in einer ersten Position (I) eine Zündung betätigbar ist und in einer zweiten Position (II) das Sperren bzw. Freigeben des Sperrbolzens (5) ausführbar ist und, dass
der Betätiger (2) gegenüber der Steuerkulisse (3) bei einem Lenkwinkel von < 20° nur bis zur ersten Position (I) bewegbar ist.

2. Elektrische Lenkverriegelung (100) nach Anspruch 1, wobei der Betätiger (2) an dem drehbaren Lenker (1) und die Steuerkulisse (3) an einem Fahrzeugrahmen angeordnet sind.

3. Elektrische Lenkverriegelung (100) nach Anspruch 1, wobei der Betätiger (2) an einem Fahrzeugrahmen und die Steuerkulisse (3) an dem drehbaren Lenker (1) angeordnet sind.

4. Elektrische Lenkverriegelung (100) nach einem der vorhergehenden Ansprüche, wobei der Betätiger (2) nur auf einer Lenkanschlagseite des Lenkers (1) in dem bestimmten Lenkwinkelbereich bewegbar ist.

5. Elektrische Lenkverriegelung (100) nach einem der vorhergehenden Ansprüche, wobei sich die Steuerkulisse (3) in radialer Richtung erstreckt und eine erste Fläche (3a) aufweist.

6. Elektrische Lenkverriegelung (100) nach einem der vorhergehenden Ansprüche, wobei an der ersten Fläche (3a) eine zweite Fläche (3b) über eine Hubfläche (3c) verbunden angeordnet ist.

7. Elektrische Lenkverriegelung (100) nach einem der vorhergehenden Ansprüche, wobei der Betätiger (2) gegenüber der Steuerkulisse (3) verdrehbar angeordnet ist und sich die Hubachse des Betätigers (2) im Wesentlichen senkrecht zu den Flächen (3a, 3b) der Steuerkulisse (3) erstreckt.

8. Elektrische Lenkverriegelung (100) nach einem der vorhergehenden Ansprüche, wobei die Hubachse des Betätigers (2) gegenüber der Steuerkulisse (3) bei einem bestimmten Lenkwinkel, insbesondere von ≥ 20 °, senkrecht zu den Flächen (3a, 3b) angeordnet ist und der Betätiger (2) bis zur zweiten Position (II) beweglich ist.

## Claims

1. Electric steering lock (100) for a vehicle, in particular a motorised two-wheeler or three-wheeler, comprising:
- a drive unit,
- a locking bolt (5),
- an actuator (2) and
- a control slot (3), which is mechanically coupled to the actuator (2) in such a way that this latter is movable only in a specific steering angle range in a lifting axis in order to lock and to release a steering member (1) by the locking bolt (5),
**characterised in that** the actuator (2) is movable only at a steering angle of ≥ 20° in two stages, wherein in a first position (I) an ignition can be actuated and in a second position (II) the locking or release of the locking bolt (5) can be carried out, and that the actuator (2) is movable relative to the control slide (3) at a steering angle of < 20° only to the first position (I).

2. Electrical steering lock (100) according to claim 1, wherein the actuator (2) is arranged on the rotatable steering member (1) and the control slot (3) is arranged on a vehicle frame.

3. Electrical steering lock (100) according to claim 1, wherein the actuator (2) is arranged on a vehicle frame and the control slot (3) is arranged on the rotatable steering member (1).

4. Electrical steering lock (100) according to one of the preceding claims, wherein the actuator (2) is movable only on a steering stop side of the steering member (1) in the specific steering angle range.

5. Electrical steering lock (100) according to one of the preceding claims, wherein the control slot (3) extends in a radial direction and has a first surface (3a).

6. Electrical steering lock (100) according to one of the preceding claims, wherein a second surface (3b) is arranged on the first surface (3a) and is connected via a lifting surface (3c).

7. Electrical steering lock (100) according to one of the preceding claims, wherein the actuator (2) is arranged rotatably relative to the control slot (3) and the lifting axis of the actuator (2) extends substantially perpendicular to the surfaces (3a, 3b) of the control slot (3).

8. Electrical steering lock (100) according to one of the preceding claims, wherein the lifting axis of the actuator (2) is arranged at a specific steering angle relative to the control slot (3), in particular ≥ 20°, perpendicular to the surfaces (3a, 3b), and the actuator (2) is movable as far as the second position (II).

## Revendications

1. Un verrou de direction électrique (100) pour un véhicule, en particulier un véhicule motorisé à deux ou trois roues, comprenant :
une unité d'entraînement,
une goupille de blocage (5),
un actionneur (2) et
une coulisse de commande (3) qui est couplée mécaniquement à l'actionneur (2) de sorte que, pour le verrouillage et le déverrouillage du guidon (1), l'actionneur (2) ne puisse être déplacé que dans une certaine plage d'angles de braquage d'un axe de levage,
**caractérisé en ce que**
l'actionneur (2) ne peut être déplacé sur deux niveaux qu'à un angle de braquage de ≥ 20°, l'allumage (I) étant actionnable dans une première position et le verrouillage ou le déverrouillage de la goupille de blocage (5) étant actionnable dans une deuxième position (11), et **en ce que**
l'actionneur (2) face à la coulisse de commande (3) ne peut être déplacé que jusqu'à la première position (1) selon un angle de < 20°,

2. Un verrou de direction électrique (100) selon la Revendication 1, dans lequel l'actionneur (2) est disposé sur le guidon (1) pivotant et la coulisse de commande (3) sur un élément du cadre du véhicule.

3. Un verrou de direction électrique (100) selon la Revendication 1, dans lequel l'actionneur (2) est disposé sur un élément du cadre du véhicule et la coulisse de commande (3) sur le guidon (1) pivotant.

4. Un verrou de direction électrique (100) selon l'une quelconque des Revendication précédentes, dans lequel l'actionneur (2) ne peut être déplacé que jusqu'au côté butée du guidon (1), dans la plage d'angles déterminée.

5. Un verrou de direction électrique (100) selon l'une quelconque des Revendication précédentes, dans lequel la coulisse de commande (3) s'étend dans la direction radiale et présente une première surface (3a).

6. Un verrou de direction électrique (100) selon l'une quelconque des Revendication précédentes, dans lequel une seconde surface (3b) est reliée à une première surface (3a) et disposée au-dessus d'une surface de levage (3c).

7. Un verrou de direction électrique (100) selon l'une quelconque des Revendication précédentes, dans lequel l'actionneur (2) face à la coulisse de commande (3) est disposé de manière à pouvoir pivoter et dans lequel l'axe de levage de l'actionneur (2) s'étend essentiellement verticalement par rapport aux surfaces (3a, 3b) de la coulisse de commande (3).

8. Un verrou de direction électrique (100) selon l'une quelconque des Revendication précédentes, dans lequel l'axe de levage de l'actionneur (2) face à la coulisse de commande (3), lorsqu'un angle de braquage particulier est atteint, en particulier ≥ 20°, est disposé verticalement par rapport aux surfaces (3a. 3b) et l'actionneur (2) peut être déplacé jusqu'à la deuxième position (11).
